# EUROPÄISCHE PATENTSCHRIFT

(11) **EP 1 022 180 B1**
(45) Veröffentlichungstag und Bekanntmachung des Hinweises auf die Patenterteilung: **01.03.2006**
(21) Anmeldenummer: 99124897.2
(22) Anmeldetag: 17.12.1999
(51) Int. Cl.: B60K 37/02, B60K 37/06

(54) **Betätigungs- oder Schalteranordnung für Kraftfahrzeuge**
Actuating or switching device for motor vehicles
Dispositif d'actionnement ou de commutation pour les véhicules automobiles

(30) Priorität: 21.01.1999 DE 19902285
(43) Veröffentlichungstag der Anmeldung: 26.07.2000
(73) Patentinhaber: Volkswagen Aktiengesellschaft, 38436 Wolfsburg (DE)
(72) Erfinder: Koch, Sven, 38118 Braunschweig (DE); Frohne, Hans-Joachim, Dipl.-Ing., 38165 Lehre (DE); Wollenhaupt, Ralf, 38350 Helmstedt (DE); Bischoff, Klaus, 38173 Evessen (DE)

(56) Entgegenhaltungen:
- DE-A- 4 341 251
- US-A- 3 662 850
- US-A- 4 448 276

## Beschreibung

Die Erfindung betrifft eine Betätigungs- oder Schalteranordnung für Kraftfahrzeuge bei welcher Schalter oder Betätigungselemente im Armaturentafelbereich neben dem Lenkrad angeordnet sind, gemäß Oberbegriff des Patentanspruches 1.

Die Verteilung und Anordnung von Schaltern und Betätigungselementen hat in Kraftfahrzeugen sowohl einen praktischen, als auch einen sicherheitstechnischen Aspekt. Der praktische Aspekt liegt darin, die Schalter und Betätigungselemente in einer guten Erreichbarkeit anzuordnen. Die Schalter und Betätigungselemente müssen dabei aber nicht nur leicht erreichbar sein, sondern räumlich auch eine derartige Zuweisung haben, daß sie, wenn sie mit entsprechenden Geräten korrespondieren sollen, auch in deren Nähe angeordnet sind. Auf diese. Weise wird die Schalterbedienung für sich selbsterklärend, was sie im übrigen auch sein soll.

Aus diesem Komfortaspekt erwächst natürlich auch der sicherheitstechnische Aspekt. Der liegt darin begründet, daß die gute Erreichbarkeit, sowie die selbsterklärende Anordnung von Schalterbetätigungselementen natürlich die Konsequenz hat, daß die Ablenkung des Fahrzeugführers vom aktuellen Verkehrsgeschehen minimal ist.

Hinzu kommt jedoch ein weiterer Aspekt der die Montage als solches betrifft. Die Schalterbetätigungselemente müssen so angeordnet sein, daß die zu den meist in Kabelbäumen geführten Leitungen und Leitungssysteme im Fahrzeug zur örtlichen Verkabelung der Schalter und Betätigungselemente günstig angeordnet sind.
Aus dem Stand der Technik sind diverse Möglichkeiten zur Schalteranordnung im Armaturentafetbereich neben dem Lenkrad bekannt.

So ist der DE 39 02 673 C2 ein Schalteraufnahmeteil bekannt, in welchem mit Hilfe von Konsolen, die seitlich vom Lenkrad auf der Armaturentafel hervortreten, Schalter und Betätigungselemente angeordnet sind. Die Plazierung in Lenkradnähe verfolgt dabei das Ziel, .zumindest die für den Fahrbetrieb wichtigen Schaltelemente in Handhabungsnähe zum Lenkrad zu haben ohne bei Schalterbetätigung den Berührungskontakt zum Lenkrad selbst zu verlieren.
Nachteilig ist hierbei jedoch, daß die Konsolen sehr aufwendig gestaltet sind und weit hervorstehen. Dies kann zum einen zu einer Behinderung der Lenkradbetätigung führen und zum anderen auch eine günstige Beinstellung bei großen Personen behindern.

Aus dem Stand der Technik sind des Weiteren diverse Anzeigeinstrumente bekannt. Innerhalb der Armaturentafel sind in der Regel Anzeigeinstrumente für Geschwindigkeit, Drehzahl, Kontrolleuchten und dgl. mehr vorgesehen, die in einem baulich zusammengefaßten Gerät bzw. einer vorgefertigten Baueinheit angeordnet sind. Eine solche vorgefertigte Baueinheit, die alle wichtigen genannten Anzeigeelemente enthält, wird dabei oftmals als Kombi-Anzeigegerät oder Kombi-Anzeigeeinrichtung bezeichnet. Die bauliche Zusammenfassung der Instrumentierung hat den fertigungstechnischen Vorteil, daß die Kabel zum Anschluß derselben bereits in der Armaturentafel verlegt werden können und daß in einer entsprechenden Aufnahmeöffnung der Armaturentafel sodann die vorgefertigte Instrumentenbaueinheit als Kombi-Instrurnentengerät einsetzbar ist.

Zur Fixierung solcher Anzeige-Kombigeräte ist beispielsweise aus der DE 43 18 011 A1 bekannt, diese mit einer randseitigen elastischen Einfassung zu versehen, die dann im Einbauschacht der Armaturentafel eine entsprechende fixierende Spannung erzeugt.

Aus der DE 195 27 090 A1 ist ein Anzeige-Kombigerät bekannt, bei welchem die Instrumentierung in der Tiefe einstellbar ist, auf eine möglicherweise durch Fahrerindividualität abzustimmende Veränderung des Sichtwinkels.

Ferner ist in der Druckschrift US 4,448,276 eine Kombi-Anzeigeeinrichtung beschrieben, an deren Seiten Schalter angeordnet sind. Dabei sind jeweils an der linken und rechten Blendschutzwand eigene Konsolen für die Schalter angeformt. Diese zusätzlichen Konsolen wirken sich unter Umständen negativ auf die Bedienbarkeit des Lenkrads aus.

Ausgehend von dem Ausgeführten, liegt der vorliegenden Erfindung die Aufgabe zugrunde, die Anordnung der Schalter gut positioniert vorzunehmen, daß dieselben besser erreichbar sind, und damit auch eine höhere Sicherheit gewähren und außerdem unter Erfüllung einer guten Haptik leicht betätigbar sind.

Die gestellte Aufgabe wird bei einer Betätigungs- oder Schalteranordnung der gattungsgemäßen Art erfindungsgemäß durch die kennzeichnenden Merkmale des Patentanspruches 1. gelöst.

Vorteilhafte Ausgestaltungen der Erfindung sind in den nachfolgenden abhängigen Ansprüchen 2-9 angegeben.

Der Kern der Erfindung besteht dabei darin, die Schalter oder Betätigungselemente direkt seitlich an der Kombi-Anzeigeeinrichtung anzuordnen. Dabei wird gezielt auf separate Konsolen verzichtet, die aus der Amiaturentafel hervorstehen. Durch die direkte seitliche Anordnung an dem Kombi-Anzeigegerät wird weder die Lenkbewegung, noch die Sitzposition in irgendeiner Weise behindert. Dennoch sind die Schalter in erfindungsgemäßer Weise so plaziert, daß sie direkt und im Handhabungsbereich des Lenkrades angeordnet sind. Dies kommt nicht nur dem Komfort, sondern außerdem auch der Sicherheit zugute.

In weiterer vorteilhafter Ausgestaltung der Erfindung sind die Schalter oder Betätigungselemente in den seitlichen Blendschutzrändern der Kombi-Anzeigeeinrichtung bzw. des Kombi-Anzeigegerätes angeordnet, wobei das Schalter- und Betätigungselementenmodul auch gleichzeitig den seitlichen Blendschutz bilden kann.

Damit wird eine besonders kompakte Bauform erzielt, die außerdem auch keine über die Armaturentafel hinaustretenden Konsolen notwendig macht.

In weiterer vorteilhafter Ausgestaltung der Erfindung sind symmetrisch verteilt sowohl im linken, als auch im rechten Blendschutzrand eine Mehrzahl von Schaltern oder Betätigungselementen angeordnet.

Weitergehend ist es vorteilhaft, eine integrierte Verkabelung in Öffnungen oder Schächten im Blendschutzrand oder am Kombi-Instrument vorzusehen, so daß mittels Steckkontakte eine einfache elektrische Kontaktierung und Einbringung der Schalter möglich ist.

Zur Erzielung einer guten Haptik ist in weiterer vorteilhafter Ausgestaltung vorgesehen, daß die seitlichen Blendschutzränder zum Fahrer hin konvex gewölbt sind, so daß die Schalter ebenfalls auf einer konvexen Linie dem Fahrer zugewandt verlaufen. Die Schalter sind zweckmäßigerweise Tast- und/oder Wippschalter und können mit Symbolbeleuchtung zur guten Erkennung beleuchtet sein.

Zur Erzielung einer besonders guten. Haptik sind die Schalter selbst ebenfalls leicht konvex gewölbt, so daß eine gute Griffigkeit entsteht, ohne die Schalter weit nach außen stehen lassen zu müssen.

Die Erfindung ist in der Zeichnung dargestellt und nachfolgend näher beschrieben.

Es zeigt:
- Figur 1:: Erfindungsgemäßes Kombi-Instrument.
- Figur 2:: Seitenansicht auf Kombi-Instrument.

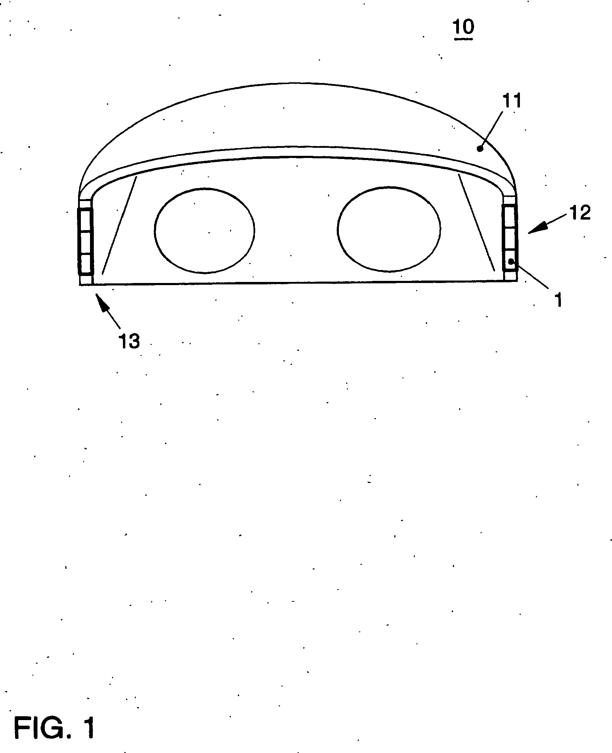

Figur 1 zeigt eine Ausführungsform der Erfindung, bei welcher die elektrischen Schalter oder Betätigungselemente 1 in den seitlichen Blendschutzrändern 12 und 13 des Blendschutzes 11 des Kombi-Anzeigegerätes 10 angeordnet sind. Das Kombi-Anzeigegerät 10 beinhaltet alle wesentlichen Anzeigeinstrumente wie Tachometer, Drehzahlmesser und dgl, mehr, die ansonsten in üblichen Kombi-Anzeigegeräten zusammengefaßt sind. In den seitlichen Blendschutzrändern sind die Schalter oder Betätigungselemente 1 integriert, so daß dieselben nicht nennenswert über den Armaturentafelbereich hinausstehen. Dadurch wird verhindert, daß hinderliche Konsolen in den Lenkradhandhabungsbereich hineinragen und somit störend und aus sicherheitstechnischer Sicht nicht tragbar sind.

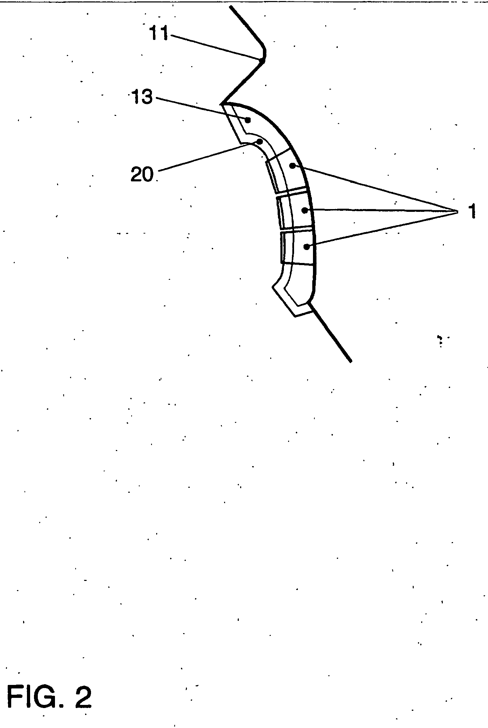

Figur 2 zeigt in seitlicher Darstellung, daß die seitlichen Blendschutzränder 12 und 13 des Blendschutzes 11 konvex, d. h. zum Fahrer hin gewölbt sind. Auf der sich so ergebenden Linie sind entsprechend verteilt die Schalter bzw. die Betätigungselemente 1 plaziert, so daß auch diese der Wölbung nachgehend angeordnet sind. Zur Fixierung der Schalter bzw. Betätigungselemente- 1 sind Klemmprofile oder -schienen 20 vorgesehen, in oder auf welche die Schalter oder Betätigungselemente 1 ein oder aufgeclipst werden können. Die Profile sind innerhalb der besagten Blendschutzränder derart angeordnet, daß die Schalter in der beschriebenen bestimmungsgemäßen Funktionslage plaziert sind.

In weiterer vorteilhafter Ausgestaltung der Erfindung sind die einzelnen Schalter oberflächlich ebenfalls noch einmal gewölbt; wodurch eine gute Griffigkeit und somit eine sichere Haptik zur Schalterbetätigung entsteht. Durch die konvexe Vorformung der Btendschutzränder und der entsprechend konvexen Anordnung der Schalter innerhalb derselben, sind die Betätigungselemente leicht zu bedienen. Wesentlich ist hierbei, daß spezifische Funktionen auf die entsprechenden Betätigungselemente 1 gelegt werden. So zum Beispiel der Kilometerstand-Reset sowie die Instrumentenbeleuchtung bzw. deren Dimmung. Durch eine entsprechende Auslagerung genau dieser Elemente aus dem eigentlichen Anzeigebereich des Kombi-Anzeigegerätes 10 kann die Verblendung derselben nunmehr völlig geschlossen werden und dennoch sind die zu dem KombiGerät zugehörigen Funktionen dennoch in ihrer direkten haptischen Nähe angeordnet.

In den Blendschutzrändern 12 und 13 sind zur Aufnahme der Schalter jeweils ein Schacht integriert, in welchen die Schalter einzeln oder am Block, d.h. in einer Mehrfachschaltereinheit einschieb- bzw. einbaubar sind. Am Boden des jeweiligen Schachtes können festverlegte Kabel und elektrische Steckkontakte vorgesehen sein.

Die Oberfläche des jeweiligen Schalterblockes ist derart schlüssig, daß sich die Krümmungen der einzelnen Schalter zu einer idealisierten, in Summe insgesamt konvex gekrümmten Oberfläche ergeben.

## Patentansprüche

1. Armaturentafel mit Betätigungs- oder Schalteranordnung für Kraftfahrzeuge bei welcher Schalter im Armaturentafelbereich neben dem Lenkrad angeordnet sind, wobei die Schalter oder Betätigungselemente (1) direkt seitlich an dem Kombi-Anzeigegerät (10) angeordnet sind, **dadurch gekennzeichnet, daß** die Schalter oder Betätigungselemente (1) in den seitlichen Blendschutzrändern (12, 13) des Blendschutzes (11) des Kombi-Anzeigegerätes (10) ohne separate Konsole angeordnet sind.

2. Armaturentafel mit Betätigungs- oder Schalteranordnung nach Anspruch 1, **dadurch gekennzeichnet, daß** die Schalter oder Betätigungselemente (1) als Modul baulich vorgefertigt in dem Kombi-Anzeigegerät (10) integriert sind.

3. Armaturentafel mit Betätigungs- oder Schalteranordnung nach Anspruch 1 oder 2, **dadurch gekennzeichnet, daß** innerhalb der Blendschutzränder (12,13) jeweils ein Klemmprofil oder eine Klemmschiene (20) angeordnet ist, in oder auf welchem bzw. welcher die Schalter oder Betätigungselemente (1) ein- oder aufclipsbar sind.

4. Armaturentafel mit Betätigungs- oder Schalteranordnung nach Anspruch 1, 2 oder 3, **dadurch gekennzeichnet, daß** symmetrisch verteilt sowohl im linken, als auch im rechten Blendschutzrand (12, 13) eine Mehrzahl von Schaltern oder Betätigungselementen (1) angeordnet sind.

5. Armaturentafel mit Betätigungs- oder Schalteranordnung nach einem der vorhergehenden Ansprüche, **dadurch gekennzeichnet, daß** die Blendschutzränder (12, 13) Einbauschächte mit integrierter Verkabelung und Steckkontakten zum Einstecken der Schalter oder Betätigungselemente (1) aufweisen.

6. Armaturentafel mit Betätigungs- oder Schalteranordnung nach einem der vorhergehenden Ansprüche, **dadurch gekennzeichnet, daß** die Seiten der Blendschutzränder (12, 13) zum Fahrer hin konvex gewölbt sind.

7. Armaturentafel mit Betätigungs- oder Schalteranordnung nach einem der vorhergehenden Ansprüche, **dadurch gekennzeichnet, daß** die Schalter oder Betätigungselemente (1) Tast- und Wippschalter sind.

8. Armaturentafel mit Betätigungs- oder Schalteranordnung nach einem der vorhergehenden Ansprüche, **dadurch gekennzeichnet, daß** die Schalter oder Betätigungselemente (1) beleuchtet bzw. mit einer Symbolbeleuchtung versehen sind.

9. Armaturentafel mit Betätigungs- oder Schalteranordnung nach einem der vorhergehenden Ansprüche, **dadurch gekennzeichnet, daß** die Schalter oder Betätigungselemente (1) selbst oberflächlich konvex gewölbt sind.

10. Armaturentafel mit Betätigungs- oder Schalteranordnung nach einem der vorhergehenden Ansprüche, **dadurch gekennzeichnet, daß** die Schalter oder Betätigungselemente (1) Funktionen wie Kilometerstandreset und Instrumentenbeleuchtung bzw. Instrumentenbeleuchtungsdimmung aufweisen.

11. Armaturentafel mit Betätigungs- oder Schalteranordnung nach einem der vorhergehenden Ansprüche, **dadurch gekennzeichnet, daß** die Schalter oder Betätigungselemente (1) als jeweiliger Block zusammengefaßt sind.

## Claims

1. Dashboard having an activation arrangement or switch arrangement for motor vehicles in which switches are arranged in the dashboard area adjacent to the steering wheel, with the switches or activation elements (1) being arranged directly to the side of the combination display device (10), **characterized in that** the switches or activation elements (1) are arranged in the lateral edges (12, 13) of the anti-dazzle device (11) of the combination display device (10) without a separate bracket.

2. Dashboard having an activation arrangement or switch arrangement according to Claim 1, **characterized in that** the switches or activation elements (1) are integrated as a prefabricated module in the combination display device (10).

3. Dashboard having an activation arrangement or switch arrangement according to Claim 1 or 2, **characterized in that** a clamping profile or a clamping rail (20) into or onto which the switches or activation elements (1) can be clipped is arranged in each case within the edges (12, 13) of the anti-dazzle device.

4. Dashboard having an activation arrangement or switch arrangement according to Claims 1, 2 or 3, **characterized in that** a plurality of switches or activation elements (1) are arranged distributed symmetrically both in the left-hand and in the righthand edge (12, 13) of the anti-dazzle device.

5. Dashboard having an activation arrangement or switch arrangement according to one of the preceding claims, **characterized in that** the edges (12, 13) of the anti-dazzle device have installation shafts with integrated cabling and plug-type contacts for plugging in the switches or activation elements (1).

6. Dashboard having an activation arrangement or switch arrangement according to one of the preceding claims, **characterized in that** the sides of the edges (12, 13) of the anti-dazzle device are curved convexly with respect to the driver.

7. Dashboard having an activation arrangement or switch arrangement according to one of the preceding claims, **characterized in that** the switches or activation elements (1) are momentary contact switches and rocker switches.

8. Dashboard having an activation arrangement or switch arrangement according to one of the preceding claims, **characterized in that** the switches or activation elements (1) are illuminated or provided with a symbol illumination.

9. Dashboard having an activation arrangement or switch arrangement according to one of the preceding claims, **characterized in that** the switches or activation elements (1) themselves are curved in a superficially convex fashion.

10. Dashboard having an activation arrangement or switch arrangement according to one of the preceding claims, **characterized in that** the switches or activation elements (1) have functions such as kilometre reading reset, instrument illumination and dimming of instrument illumination.

11. Dashboard having an activation arrangement or switch arrangement according to one of the preceding claims, **characterized in that** the switches or activation elements (1) are combined as a respective block.

## Revendications

1. Tableau de bord avec un dispositif d'actionnement ou de commutation pour véhicules automobiles, dans lequel des commutateurs sont disposés dans la région du tableau de bord à côté du volant de direction, les commutateurs ou les éléments d'actionnement (1) étant disposés directement latéralement à l'instrument indicateur combiné (10), **caractérisé en ce que** les commutateurs ou les éléments d'actionnement (1) sont disposés dans les bords latéraux (12, 13) du dispositif antiéblouissement (11) de l'instrument indicateur combiné (10) sans console séparée.

2. Tableau de bord avec un dispositif d'actionnement ou de commutation selon la revendication 1, **caractérisé en ce que** les commutateurs ou les éléments d'actionnement (1) sont intégrés dans l'instrument indicateur combiné (10) sous forme préfabriquée sous forme de module constructif.

3. Tableau de bord avec un dispositif d'actionnement ou de commutation selon la revendication 1 ou 2, **caractérisé en ce qu'**à l'intérieur des bords (12, 13) du dispositif antiéblouissement est disposé à chaque fois un profilé de serrage ou un rail de serrage (20) dans lequel ou sur lequel les commutateurs ou les éléments d'actionnement (1) peuvent être enclipsés.

4. Tableau de bord avec un dispositif d'actionnement ou de commutation selon la revendication 1, 2 ou 3, **caractérisé en ce qu'**une pluralité de commutateurs ou d'éléments d'actionnement (1) sont disposés de manière répartie symétriquement dans le bord gauche et dans le bord droit (12, 13) du dispositif antiéblouissement.

5. Tableau de bord avec un dispositif d'actionnement ou de commutation selon l'une quelconque des revendications précédentes, **caractérisé en ce que** les bords (12, 13) du dispositif antiéblouissement présentent des supports d'encastrement avec un câblage intégré et des contacts d'enfichage pour l'enfichage des commutateurs ou des éléments d'actionnement (1).

6. Tableau de bord avec un dispositif d'actionnement ou de commutation selon l'une quelconque des revendications précédentes, **caractérisé en ce que** les côtés des bords (12, 13) du dispositif antiéblouissement sont courbés de manière convexe vers le conducteur.

7. Tableau de bord avec un dispositif d'actionnement ou de commutation selon l'une quelconque des revendications précédentes, **caractérisé en ce que** les commutateurs ou les éléments d'actionnement (1) sont des commutateurs à touche ou à bascule.

8. Tableau de bord avec un dispositif d'actionnement ou de commutation selon l'une quelconque des revendications précédentes, **caractérisé en ce que** les commutateurs ou les éléments d'actionnement (1) sont éclairés ou sont pourvus d'un éclairage de symboles.

9. Tableau de bord avec un dispositif d'actionnement ou de commutation selon l'une quelconque des revendications précédentes, **caractérisé en ce que** les commutateurs ou les éléments d'actionnement (1) sont eux-mêmes courbés de manière convexe sur leur surface.

10. Tableau de bord avec un dispositif d'actionnement ou de commutation selon l'une quelconque des revendications précédentes, **caractérisé en ce que** les commutateurs ou les éléments d'actionnement (1) présentent des fonctions telles que la remise à zéro du kilométrage et l'éclairage des instruments ou l'atténuation de l'éclairage des instruments.

11. Tableau de bord avec un dispositif d'actionnement ou de commutation selon l'une quelconque des revendications précédentes, **caractérisé en ce que** les commutateurs ou les éléments d'actionnement (1) sont assemblés sous forme de bloc respectif.
